# EUROPÄISCHE PATENTSCHRIFT

(11) **EP 1 795 092 B1**
(45) Veröffentlichungstag und Bekanntmachung des Hinweises auf die Patenterteilung: **11.03.2009**
(21) Anmeldenummer: 06025065.1
(22) Anmeldetag: 05.12.2006
(51) Int. Cl.: A47J 27/04, A47J 39/00, A47J 36/38, H01L 35/00, A47J 31/60

(54) **Verfahren zum Betrieb eines Haushaltsgerätes, das Wasser zum Betrieb benötigt, und entsprechendes Haushaltsgerät**
Method for operating a household appliance that utilizes water, and corresponding appliance
Procédé d'opération d'un appareil ménager qui utilise de l'eau, et appareil correspondant

(30) Priorität: 06.12.2005 DE 102005059506; 06.12.2005 DE 102005059504; 22.12.2005 DE 102005063214
(43) Veröffentlichungstag der Anmeldung: 13.06.2007
(73) Patentinhaber: E.G.O. ELEKTRO-GERÄTEBAU GmbH, 75038 Oberderdingen (DE)
(72) Erfinder: Bellm, Mathias, 76646 Bruchsal (DE); Riffel, Michael, Dr., 75038 Oberderdingen (DE)
(74) Vertreter: Patentanwälte Ruff, Wilhelm, Beier, Dauster & Partner

(56) Entgegenhaltungen:
- DE-A1- 10 038 759
- DE-A1- 10 054 778
- DE-C1- 10 110 112
- FR-A- 2 808 077
- GB-A- 2 371 211
- GB-A- 2 395 945
- US-B1- 6 279 464

## Beschreibung

### Anwendungsgebiet und Stand der Technik

Die Erfindung betrifft ein Verfahren zum Betrieb eines Haushaltsgerätes, das zu seinem Betrieb Wasser benötigt bzw. verwendet, sowie ein solches Haushaltsgerät, mit dem das vorgenannte Verfahren durchgeführt wird.

Für derartige Haushaltsgeräte wie beispielsweise Dampfgarer oder Backöfen mit Dampfgar-Funktion ist es bekannt, einen Wasservorrat wie beispielsweise einen zum Befüllen entnehmbaren Wasservorrat nach Art eines Behälters vorzusehen. Soll das Haushaltgerät betrieben werden, so ist nachzuprüfen, ob noch ausreichend viel Wasser in dem Wasservorrat ist, so dass dieser gegebenenfalls nachgefüllt werden muss. Dies ist aufwendig. Abhilfe wird hier zum Teil dadurch geschaffen, dass beispielsweise eine feste Wasserzuleitung installiert wird, die mit dem normalen Wasserleitungssystem in einem Haus verbunden ist. Dies stellt jedoch durchaus einen signifikanten Aufwand sowohl beim Einbau dar als auch dass das Haushaltsgerät ohne einen solchen vorgesehenen Anschluss kaum nachträglich installiert werden kann.

Des Weiteren kann sich bei längerer Nichtbenutzung, zum Beispiel während der Urlaubszeit, noch Restwasser in dem Haushaltsgerät befinden, was zu unhygienischen Zuständen und Geruchsbelästigung führen kann. Derartiges Restwasser kann entweder durch eine nicht ausreichend sorgfältige Reinigung übrig bleiben oder aber auch konstruktionsbedingt in einem Wasservorrat bzw. einem entsprechenden Behälter sein. Da das Wasser für den Betrieb mit Dampfgaren verdampft wird, entsteht zwar nicht unbedingt eine unmittelbare Gesundheitsgefährdung. Alleine die Geruchsbelästigung jedoch kann sich bereits stark negativ bemerkbar machen.

Die GB-A-2371211 beschreibt einen sogenannten Steamer, bei dem Wasser in einem Wasservorrat in seinem unteren Bereich vorhanden ist. Aus diesem Wasser wird Dampf gewonnen. In einem Kanal einer Dampfführung aus dem Steamer heraus kühlt sich der Dampf ab und kondensiert zu Wasser, welches wiederum in dem Wasservorrat aufgefangen werden kann für eine erneute Erzeugung von Dampf. Also wird hier Dampf aus der Abluft des Steamers selber rückgewonnen.

Die FR-A-2808077 beschreibt einen weiteren Steamer, der einen Wasservorrat aufweist, aus dem Wasser entnommen wird zur Bildung von Dampf, der dann in das Innere des Steamers eingeleitet wird.

Die DE-A-10054778 beschreibt hydrophiles Material, mit dem in einem Getränkeautomat Kondensat bzw. Wasser aus einem Luftstrom abgeschieden werden kann. Dazu ist als hydrophiles Material ein hydrophiler bzw. offenporiger Schaumstoff vorgesehen. Des Weiteren ist ein Einsatzmodul zur Wasserentkeimung mittels Bestrahlung mit UV-Licht beschrieben.

### Aufgabe und Lösung

Der Erfindung liegt die Aufgabe zugrunde, ein eingangs genanntes Verfahren sowie ein danach arbeitendes Haushaltsgerät zu schaffen, mit denen Probleme des Standes der Technik vermieden werden können und insbesondere Installation und Betrieb des Haushaltsgerätes einfach, sicher und komfortabel erfolgen können.

Gelöst wird diese Aufgabe gemäß einer ersten grundsätzlichen Ausbildung der Erfindung durch ein Verfahren mit den Merkmalen des Anspruchs 1 sowie ein Haushaltsgerät mit den Merkmalen des Anspruchs 14, mit dem dieses Verfahren durchgeführt werden kann. Vorteilhafte sowie bevorzugte Ausgestaltungen der Erfindung sind Gegenstand der weiteren Ansprüche und werden im Folgenden näher erläutert. Manche der nachfolgend angeführten Merkmale werden nur einmal beschrieben. Sie sollen jedoch unabhängig davon sowohl für die Verfahren als auch für die beschriebenen Haushaltsgeräte gelten können. Der Wortlaut der Ansprüche wird durch ausdrückliche Bezugnahme zum Inhalt der Beschreibung gemacht.

Erfindungemäß ist vorgesehen, dass das zum Betrieb des Haushaltsgerätes benötigte Wasser durch Umwandlungsmittel aus Umgebungsluft oder Abluft eines anderen Elektrohaushaltsgerätes erzeugt wird. Hierbei ist es vorgesehen, das Haushaltsgerät, das beispielsweise ein Dampfgarer sein kann, an ein solches weiteres Elektrohaushaltsgerät anzuschließen mittels einer Luft- oder Dampfleitung. Dies ist, falls sich das andere Elektrohaushaltsgerät dafür eignet, auch nachträglich möglich. Bei Gewinnung des Wassers aus der Umgebungsluft wird eine Luftansaugung odgl. benötigt.

Somit ist es durch die Erfindung möglich, ein notwendiges Befüllen eines Wasservorrats auf manuelle Art und Weise durch eine Bedienperson einzusparen. Das Haushaltsgerät bzw. ein Dampfgarer sorgt somit weitgehend, unter Umständen vollständig, selbsttätig für das zum Betrieb notwendige Wasser auch ohne eine fest installierte Wasserleitung odgl.. Funktionen wie die Verwendung von Abluft eines anderen Elektrohaushaltsgerätes weisen sogar den Vorteil auf, dass zumindest die Feuchtigkeit aus dieser Abluft entzogen wird und somit die Menge an in der Küche entstehendem Wasserdampf samt dessen unangenehmen Folgen reduziert werden kann.

Gemäß einer ersten grundsätzlichen Ausbildung der Erfindung sind die Umwandlungsmittel eine Kondensationseinrichtung bzw. Kühleinrichtung. Entsprechend einer Möglichkeit zur Ausführung der Erfindung kann ein Kompressorkühlschrank bzw. ein Kompressorgerät benutzt werden zur Erzeugung des Wassers. Das Prinzip der Erzeugung von Feuchtigkeit aus wärmerer Luft oder Dampf mit hoher Luftfeuchtigkeit durch Abkühlen ist von anderen Anwendungen bekannt, beispielsweise Kondensations-Wäschetrocknern. Die Umsetzung in die Praxis stellt den Fachmann vor keinerlei Probleme.

Eine andere Möglichkeit zur Ausführung der Erfindung besteht darin, mittels eines Peltier-Elementes Wasser zu erzeugen. Dies funktioniert auf einem ähnlichen Prinzip wie vorgenannt mit dem Kompressor, und zwar auch durch Abkühlen von wärmerer Luft oder Dampf mit hoher Luftfeuchtigkeit. Der Unterschied hier besteht darin, dass als Kältemaschine kein Kompressor verwendet wird, sondern ein elektrophysikalisches Element, nämlich eben ein Peltier-Element. Dieses benötigt lediglich Strom.

Gemäß einer zweiten grundsätzlichen Ausbildung der Erfindung enthalten die Umwandlungsmittel hydrophiles Material, insbesondere Zeolithe oder Silikagel. Damit kann der genannten Umgebungsluft oder Abluft von Wasser bzw. Feuchtigkeit entzogen werden und in dem hydrophilen Material gespeichert werden. Dies kann ohne zusätzliche technische Hilfsmittel ablaufen allein aufgrund der hydrophilen Eigenschaften. Somit kann sogar Energie bzw. Aufwand eingespart werden. Da die Feuchteaufnahme von Zeolith beispielsweise 30 Gew.% betragen kann, kann mit etwa 3kg Zeolith knapp 1 I Wasser gewonnen und gespeichert werden. Es sollte lediglich für eine gute Durchlüftung des Materials gesorgt werden, damit die Feuchteaufnahme aus der durchgeleiteten Luft möglichst gut ist. Das Material kann dabei nach Art von Streu oder Granulat vorliegen.

Während für die Abgabe der Feuchtigkeit für den Betrieb des Haushaltsgerätes das Wasser verdampft werden muss, kann das hydrophile Material vorteilhaft erwärmt werden, um die gespeicherte Feuchtigkeit direkt in Dampf zur umzuwandeln. Dabei kann besonders vorteilhaft die Erwärmung des hydrophilen Materials auf gleiche Weise erfolgen wie das Beheizen des Haushaltsgerätes, insbesondere durch Anströmen mit erhitzter Luft. So kann das hydrophilen Material gleich im Anströmweg einer Heißluft-Beheizung für das Gerät liegen. Das gespeicherte Wasser wird bei etwa 200°C bis 300°C abgegeben in Form von entsprechend erhitztem Wasserdampf. Damit kann der Schritt zusammen mit der ohnehin notwendigen Erhitzung durchgeführt werden.

Bei der Nutzung der Abluft eines anderen Elektrohaushaltsgerätes kann im Falle eines Backofens eine feststehende bzw. festinstallierte Leitung von dessen Wrasenausgang zu dem Haushaltsgerät bzw. den Umwandlungsmitteln führen. Besonders einfach ist eine derartige leitende Verbindung, wenn die beiden Geräte möglichst nahe beieinander stehen, beispielsweise sogar nebeneinander oder aufeinander gestellt sind. In diesem Falle kann eine solche Dampfleitung an den Geräterückseiten verlaufen bzw. optisch verborgen sein.

Bei der Nutzung von Umgebungsluft kann diese mittels einer fest installierten Leitung in das Haushaltsgerät eingeleitet werden bzw. durch Ansaugschlitze angesaugt werden.

Für den Fall, dass gerade kein weiteres Elektrohaushaltsgerät betrieben wird mit Dampferzeugung und somit keine vorgenannte Abluft zur Wassergewinnung zur Verfügung steht, kann vorgesehen sein, dass in dem Haushaltsgerät ein interner Wasservorrat enthalten ist. In diesem kann, unter Umständen in einer Art Automatikbetrieb, stets soviel Wasser angesammelt werden, dass es für eine gewisse Betriebsdauer des Haushaltsgerätes bzw. des Dampfgarers ausreicht. Damit ist ein gewisser autarker Betrieb möglich. Unter Umständen kann ein solcher Wasservorrat auch von außen durch eine Bedienperson befüllt werden, falls die anderen beschriebenen Möglichkeiten zur Wassererzeugung nicht ausreichen.

In dem Wasservorrat können auch hydrophile Materialien angeordnet sein. Diese können unabhängig von der vorgenannten Methode der Feuchteaufnahme aus Luft durch hydrophile Materialien lediglich die Bevorratung des Wassers unterstützen, insbesondere gegen ein Austrocknen bzw. Verdunsten des Wassers aus dem Wasservorrat. Hierzu kann ein eigener Behälter oder eine Aufnahme für das hydrophile Material vorgesehen sein, der unter Umständen auch entnehmbar bzw. austauschbar ist. Als hydrophile Materialien werden vorzugsweise wiederum Zeolithe oder Silikagel eingesetzt. Ein Entzug der Feuchte zum Betrieb des Haushaltsgerätes kann wiederum erfolgen wie zuvor beschrieben.

Gemäß einer weiteren Ausbildung der Erfindung kann vorgesehen sein, dass gekühlte bzw. entfeuchtete Luft als Schutz vor Verbrennungen in den Türbereich geblasen wird sobald die Tür geöffnet wird. So ist ein Schutz vor Verbrennungen oder Verbrühungen beim Greifen in das Haushaltsgerät, insbesondere in den Garraum eines Dampfgarers, möglich. Ebenso kann dadurch verhindert werden, dass heiße und feuchte Luft einer Bedienperson in das Gesicht geblasen wird mit ähnlichen Folgen, wenn diese beim Öffnen der Tür eines Dampfgarers zu nahe an dem Gerät steht.

Erfindungsgemäß weist das Haushaltsgerät einen befüllbaren Wasservorrat auf, aus dem während des Betriebes des Haushaltsgeräts Wasser entnommen wird, beispielsweise zur Erzeugung von Dampf in einem Dampfgarer. Vorteilhaft ist eine Desinfektion des Wasservorrates zu vorgebbaren eingestellten Zeiten vorgesehen. Durch diese Desinfektion können Krankheitskeime sowie Bakterien oder auch Viren unschädlich gemacht werden für eine problemlose Wasserbevorratung. Insbesondere ist es dadurch auch möglich, dass entweder ein größerer Wasservorrat vorhanden sein kann, der nicht so oft nachgefüllt werden muss, und somit auch über längere Zeit stehen kann. Des Weiteren können dadurch Probleme durch Restwasser in dem Wasservorrat bzw. einem entsprechenden Wasservorratsbehälter vermieden werden, auch wenn der Dampfgarer beispielsweise während eines Urlaubs für längere Zeit nicht benötigt wird und konstruktionsbedingt immer etwas Restwasser in dem Behälter verbleibt.

Gemäß einer Ausbildung der Erfindung ist eine permanente Desinfektion möglich. Diese permanente Desinfektion sollte zumindest stets dann erfolgen, wenn das Haushaltsgerät in einen sogenannten aktiven Zustand der Funktionsbereitschaft versetzt ist, also jederzeit aktiviert werden kann. Für den Stand-By-Betrieb, aus dem heraus das Gerät in Betrieb genommen werden kann, kann zumindest in gewissen Zeitabständen eine Desinfektion erfolgen. Dadurch kann erreicht werden, dass für den Fall des wahrscheinlich bald erfolgenden Betriebes des Haushaltsgerätes der Wasservorrat desinfiziert ist.

Des Weiteren kann gemäß einer anderen Ausbildung der Erfindung vorgesehen sein, dass entweder immer oder zumindest in bestimmten Betriebszuständen der Wasservorrat in gewissen vorgegebenen oder vorgebarren Zeitabständen desinfiziert wird, also zumindest hier keine permanente Desinfektion erfolgt. Diese Zeitabstände können durch eine Steuerung des Haushaltsgerätes bestimmt werden abhängig von verschiedenen Faktoren wie Betriebsdauer oder Betriebshäufigkeit, letzte überwachte Befüllung des Wasservorrates odgl..

Gemäß einer nochmals weiteren Ausbildung der Erfindung kann eine gesonderte Desinfektion erfolgen, wenn eine Bedienperson das Haushaltsgerät aktiviert hat bzw. aus einem Stand-By-Zustand in einen aktiven Zustand der Funktionsbereitschaft versetzt hat. Dann erfolgt die Desinfektion vor allem bevor der eigentliche Betrieb des Haushaltsgerätes erfolgt, also beispielsweise die Verwendung von Wasser aus dem Vorrat zur Erzeugung von Wasserdampf. Eine zu diesem Zeitpunkt vorgenommene Desinfektion weist den Vorteil auf, dass sie unabhängig von dem Zustand des Wassers in dem Wasservorrat oder einer Ruhezeit sicherstellt, dass das Wasser zum Zeitpunkt der Verwendung in dem Haushaltgerät desinfiziert ist.

Es kann aus den vorgenannten Möglichkeiten zum Zeitpunkt des Desinfizierens eine Art Kombinationsbetrieb für das Haushaltsgerät zusammengestellt werden, der nach verschiedenen Phasen unterscheidet. Insbesondere kann auch Stand-By-Zustand einerseits und aktiver Zustand der Funktionsbereitschaft andererseits unterschieden werden.

Zum Ablauf der Desinfektion gibt es verschiedene Möglichkeiten. Einerseits kann eine Desinfektion durch eine elektrische Funktionseinrichtung vorgenommen werden. Dies kann einerseits mit einer UV-Lichtquelle erfolgen durch Bestrahlung mit Licht in einer Wellenlänge im Bereich zwischen 200 nm und 280 nm. Dadurch können sämtliche Mikroorganismen abgetötet werden. Eine UV-Lichtquelle kann entweder direkt in den Wasservorrat hineinragen und großräumig bzw. rundum abstrahlen. Als Alternative kann sie außerhalb des Wasservorrates angeordnet sein und durch Fenster bzw. durchsichtige Wände oder von oben in den offenen Wasservorrat hineinstrahlen. Bei dieser Lösung muss die UV-Lichtquelle nicht abgedichtet sein.

Eine weitere Möglichkeit zu Desinfektion ist eine thermische Behandlung, also Erhitzen oder Kochen des Wassers im Wasservorrat. Hierzu kann eine elektrische Heizeinrichtung vorgesehen sein, die entweder in den Wasservorrat ragt oder nach Art eines Wasserkochers odgl. direkt an einer Wand bzw. am Boden des Wasservorrates angeordnet ist.

Eine weitere Möglichkeit zu Desinfektion erfolgt mit Chlor oder einem ähnlich wirkenden Stoff bzw. einem ähnlichen Gas. Die Beimischung zu dem Wasservorrat kann durch eine Mischeinrichtung erfolgen verbunden mit einer Dosiereinrichtung odgl., die durch eine Steuerung des Haushaltsgerätes gesteuert wird. Als Mischeinrichtung können beispielsweise eine Venturi-Düse, ein Zerstäuber oder ein statischer Mischer verwendet werden. Dabei ist der MAK-Wert von 0,1 ppm in Luft zu beachten. Das Chlor kann in dem Haushaltsgeräts erzeugt werden, beispielsweise mittels Elektrolyse aus Kochsalz. Auch hier ist natürlich die geeignete und richtige Dosierung zu beachten, um den Chloranteil in dem Wasservorrat nicht zu groß werden zu lassen.

Eine mögliche UV-Quelle kann eine Quecksilber Dampflampe sein. Eine UV-Behandlung hat keinen Einfluss auf Geschmack, Geruch oder Farbe des Wassers und schränkt die Trinkwassereignung nicht ein.

Auch eine Beimischung von Ozon ist selbst für die Trinkwasseraufbereitung geeignet und somit zweifellos auch für die Wasserdesinfektion in einem Dampfgarer odgl. geeignet. In vorteilhafter Ausgestaltung der Erfindung kann Ozon für die Desinfektion sogar selber in dem Haushaltsgerät erzeugt werden. Dazu kann Luft durch ein starkes elektrisches Feld mit hoher Spannung geleitet werden, woraufhin ein Teil der O₂-Moleküle gespalten wird und mit den verbliebenen O₂-Molekülen zu O₃ reagiert. Das so gewonnene Ozon kann direkt der Wasserdesinfektion zugeführt werden.

Gemäß einer weiteren Ausbildung der Erfindung kann eine Desinfektion durch Filtrieren erfolgen. Dazu können Filter in Reihenfolge kleiner werdender Porengrößen eingesetzt werden. Durch diese kann Wasser aus dem Wasservorrat entweder zu den vorgebbaren Zeiten durchgeleitet werden für eine Filtrierung. Alternativ kann Wasser, das zum Betrieb des Haushaltsgerätes entnommen wird, durch einen Filter z.B. zu einer Verdampfereinrichtung geführt werden. Eine derartige Filtereinrichtung kann Mikrofilter aufweisen, mit denen Bakterien filtriert werden können. Mit Ultrafiltern können zusätzlich auch Viren und makromolekulare organische Verbindungen gefiltert werden. Mit Hyperfiltern bzw. Umkehrosmose können selbst atomare tonen herausgefiltert werden, so dass derartige Verfahren auch für die Trinkwasseraufbereitung geeignet sind.

Der Wasservorrat in dem Haushaltsgerät kann allgemein einerseits ein Vorratsbehälter sein, der beispielsweise entnommen werden kann zum Auffüllen mit Wasser. Es kann auch ein fest installierter Wasservorratsbehälter sein, der von außen mit einer Kanne odgl. ggf. zusätzlich befüllt werden kann.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigt:
- Fig. 1: einen seitlichen Schnitt durch einen erfindungsgemäßen Dampfgarer mit einer rückseitig angesetzten Kondensationseinrichtung sowie Dampfzuleitung zu einem Backofen,
- Fig. 2: eine Abwandlung des Dampfgarers aus Fig. 1 mit integrierter Kondensationseinrichtung und Kühlluftzuleitung in einen Türbereich,
- Fig. 3: eine weitere Abwandlung eines Dampfgarers mit hydrophilem Material in den Umwandlungsmitteln,
- Fig. 4: verschiedene Anordnungen von UV-Lampen zur Desinfektion des Wasservorrats in einem Wasserbehälter,
- Fig. 5: eine in den Wasserbehälter ragende elektrische Heizeinrichtung als Desinfektionseinrichtung,
- Fig. 6: eine Einspeisung von Chlor oder Ozon in den Wasserbehälter samt Erzeugung dieser Bestandteile und
- Fig. 7: ein modifizierter Wasserbehälter samt Umwälzung durch eine Filtereinrichtung mit unterschiedlichen Filtern.

### Detaillierte Beschreibung der Ausführungsbeispiele

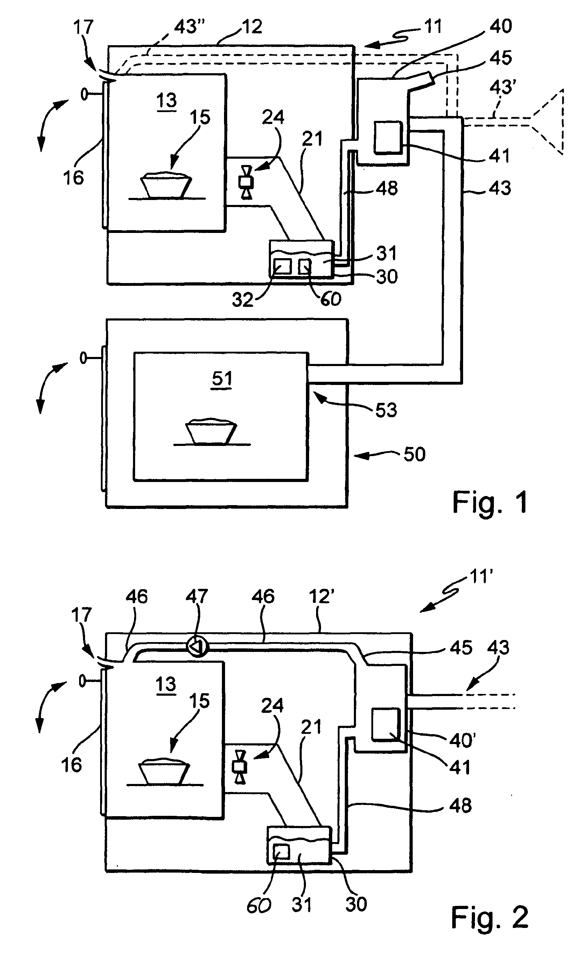

In Fig. 1 ist ein Dampfgarer 11 dargestellt mit einem Gehäuse 12, wie er beispielsweise als Einbaugerät in eine Küche eingebaut sein kann. Er weist einen Garraum 13 auf, in dem ein Gargut 15 enthalten ist auf einem entsprechenden Gargutträger. Der Zugang zu dem Garraum 13 erfolgt über eine Tür 16 nach vorne, die gemäß dem Pfeil aufgeschwenkt werden kann. Oberhalb der Tür 16 ist ein Wrasenabzug 17 aus dem Garraum vorgesehen. Der Garraum 13 kann auf üblicher Weise durch Heizkörper beheizt werden, die für den Fachmann unschwer zu realisieren sind und hier nicht dargestellt sind.

Die Dampferzeugung für den Garraum 13 erfolgt aus einem Wasservorrat bzw. Wasserbehälter 30 heraus, in dem sich Wasser 31 befindet. Über einen Ansaugkanal 21 und einen Lüfter 24 wird heißer Dampf in den Garraum 13 eingebracht. Die genaue Erzeugung dieses heißen Dampfes aus dem Wasserbehälter 30 heraus ist dem Fachmann bekannt und spielt hier keine Rolle bzw. braucht nicht erläutert zu werden. In dem Wasserbehälter 30 ist ein Behälter 32 mit Zeolith als hydrophiles Material enthalten. Es unterstützt die Bevorratung des Wassers 31 in dem Wasserbehälter 30. Der Behälter 32 kann entnehmbar sein, beispielsweise zum Austauschen des Zeoliths. Außerdem ist eine UV-Lampe 60 zur Desinfektion darin angeordnet, wie sie nachfolgend noch erläutert wird.

An der Rückseite des Gehäuses 12 befindet sich eine Kondensationseinrichtung 40, welche ein symbolisch dargestelltes Peltier-Element 41 enthält oder mehrere davon. Anstelle eines Peltier-Elementes 41 könnte auch ein Kompressorkühlschrank odgl. vorgesehen sein. Zu der Kondensationseinrichtung 40 führt eine Dampfzuleitung 43 von einem Backofen 50. Der Dampf wird dort über einen Muffelauslass 53 aus einer Backofen-Muffel 51 des Backofens 50 entnommen, um so die in dem heißen Backofen-Dampf enthaltene Flüssigkeit bzw. das Wasser in den Wasservorrat 30 zu bringen.

Alternativ zu einer direkten Verbindung bzw. Dampfzuleitung 43 zu dem Backofen 50 kann noch eine Luftzuleitung 43' vorgesehen sein. Diese saugt Umgebungsluft an, um das darin enthaltene Wasser bzw. die Feuchtigkeit herauszugewinnen. Schließlich kann als weitere Alternative eine Dampfzuleitung 43" von dem Wrasenabzug 17 des Garraums 13 vorgesehen sein. So kann hier Dampf, der beim Betrieb des Dampfgarers 11 selber entsteht, verwendet werden um daraus das enthaltene Wasser zurückzugewinnen für den Wasservorrat 30.

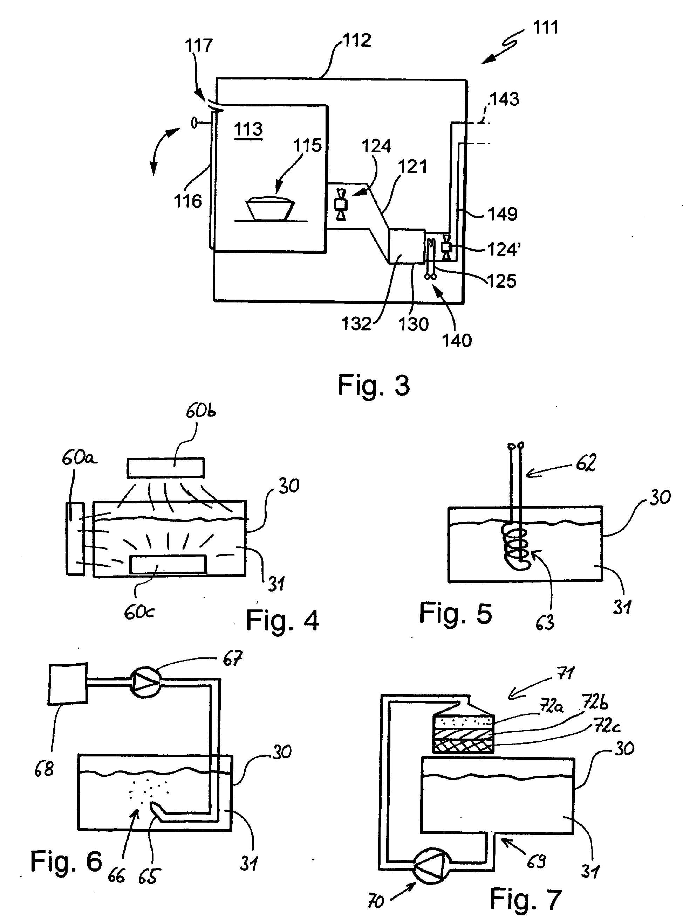

Bei dem etwas anderen Ausführungsbeispiel gemäß Fig. 3 weist der Dampfgarer 111 anders geartete Umwandlungsmittel 140 auf. Während das Gehäuse 112 mit Garraum 113, Tür 116, Wrasenabzug 117, Ansaugkanal 121 und dem linken Lüfter 124 in etwa den vorherigen entspricht, bestehen die Unterschiede bei der Ausführung der Umwandlungsmittel 140. In dem Wasservorrat 130 befindet sich Zeolith 132, beispielsweise in Form von Granulat. Dabei kann der Wasservorrat 130 bzw. der Behälter mit dem Zeolith 132 darin relativ luftdurchlässig sein im Inneren bei gleichzeitig hoher Absorptionsoberfläche. Dies kann neben der Granulatform des Zeolith 132 durch einen labyrinthartigen Aufbau mit luftdurchlässigen Gitterwänden odgl. realisiert sein.

Über eine Luftzuleitung 149 wird Umgebungsluft, eventuell auch über eine Dampfzuleitung 143 ähnlich Fig. 1 oder 2, in den Dampfgarer 111 geführt. Dies kann durch den rechten Lüfter 124' als stetiger Luftstrom verstärkt werden. Zwischen Lüfter 124' und dem Wasservorrat 130 befindet sich eine Heizeinrichtung 125, die ansonsten in Fig. 1 oder 2 nicht dargestellt ist. Deren Funktion wird nachfolgend noch genauer erläutert.

Die Menge an Zeolith 132 in dem Wasservorrat 130 kann variieren. Bei der zuvor genannten Feuchteaufnahmefähigkeit von Zeolith von etwa 30 Gew.% kann ausgehend von der für den Betrieb des Dampfgarers 111 benötigten Menge an Wasser berechnet werden, wieviel Zeolith benötigt wird. Anstelle des Zeolith 132 kann selbstverständlich auch anderes hydrophiles Material verwendet werden wie beispielsweise Silikagel odgl..

In Fig. 4 ist in Vergrößerung dargestellt, wie verschiedene UV-Lampen 60a bis 60c zur Desinfektion vorgesehen sein können. Die UV-Lampe 60a ist außerhalb des Wasserbehälters 30 angeordnet und strahlt durch dessen dementsprechend lichtdurchlässig ausgebildete Seitenwand in diesen hinein. So kann das Wasser 31 zur Desinfektion bestrahlt werden. Der Vorteil einer derartigen außenliegenden UV-Lampe 60a liegt darin, dass sie nicht wasserfest ausgebildet sein muß, da sie gekapselt und vor allem separat von dem Wasser 31 vorgesehen sein kann. Der Behälter des Wasservorrates 30 kann vollständig aus durchsichtigem Material bestehen oder auch nur im Bereich der UV-Lampe 60a. Dies stellt technisch kein Problem dar. Die UV-Lampen 60 können als Quecksilberdampflampen ausgebildet sein mit einer Wellenlänge von 253,7 nm.

Die UV-Lampe 60b ist auch außerhalb des Wasservorrats 30 angeordnet, aber darüber. Da dieser im Falle eines entnehmbaren Behälters üblicherweise nach oben offen ist zum Befüllen und auch zum Entweichen von Wasserdampf oder Wasserteilchen für eine anschließende Wasserverdampfung, ist so eine relativ einfache Ausbildung des Wasservorrates 30 möglich. Auch hier sind die vorgenannten Vorteile gegeben, dass die UV-Lampe 60b nicht wasserdicht ausgebildet sein muß. Es ist jedoch darauf zu achten, dass sie durch nach oben entweichende Wasserteilchen oder Wasserdampf nicht feucht wird bzw. beschädigt wird.

Als dritte Möglichkeit ist eine UV-Lampe 60c in dem Wasservorrat 30 bzw. mitten in dem Wasser 31 angeordnet. Vorteilhaft strahlt sie in alle Richtungen rundum ab, so dass eine Desinfektion des Wassers 31 in dem Wasservorrat 30 erreicht wird. Eine derartige UV-Lampe 60c ist zwar wasserdicht auszubilden. Dies sollte jedoch keine besonders großen Probleme darstellen. Möglich sind natürlich auch Kombinationen der gezeigten verschiedenen Anordnungen von UV-Lampen. Ebenso können mehrere UV-Lampen gleicher Art innerhalb oder außerhalb des Wasservorrates 30 angeordnet werden.

In Fig. 5 ist eine Heizeinrichtung 62 dargestellt. Ihr unteres Ende 63 ist einem Tauchsieder entsprechend spiralartig ausgebildet und ragt mitten in das Wasser 31. Die Heizeinrichtung 62 kann einen Rohrheizkörper aufweisen und problemlos in das Wasser hineinragen. Eine Desinfektion erfolgt hier also durch Erhitzen des Wassers 31, unter Umständen bis zum Siedepunkt und somit durch ein Abkochen. Soll der Wasservorrat 30 entnehmbar sein nach Art eines Wasserbehälters, so ist die Heizeinrichtung 62 verfahrbar oder abklappbar auszubilden. Auch dies stellt für den Fachmann keinerlei Probleme dar.

In Fig. 6 ist sehr schematisch dargestellt, wie mittels einer Einleitung 65 eine Art Desinfektionsmittel 66 direkt in das Wasser 31 eingebracht werden kann. Gemäß obiger Ausführungen kann das Desinfektionsmittel 66 entweder Chlor oder Ozon sein. Die Einbringung kann dabei auf dieselbe Art und Weise erfolgen.

Die rohrartige Einleitung 65 ist des Weiteren mit einer Dosiereinrichtung 67 verbunden. Diese kann durch die Steuerung 36 entsprechend gesteuert werden. Des Weiteren ist eine Erzeugungseinrichtung 68 vorgesehen. In dieser kann entweder aus Umgebungsluft durch ein starkes elektrisches Feld mit hoher Spannung Ozon als Desinfektionsmittel 66 erzeugt werden zum Einleiten in das Wasser 31. Zu beachten ist bei einer Ozonbeimischung ein MAK-Wert von 0,1 ppm in Luft. Alternativ kann durch ein entsprechend ausgebildete andere Erzeugungseinrichtung Chlor gewonnen werden, beispielsweise aus Kochsalz. Dann weist die Erzeugungseinrichtung 68 eine Elektrolyseeinrichtung auf. Diese jeweiligen Ausführungen stellen für den Fachmann jedoch kein nennenswertes Problem dar.

In Fig. 7 ist dargestellt, wie ein Wasservorrat 30 mit einem Ablauf 69 versehen ist. Bei diesem kann durch die Pumpe 70 das Wasser 31 aus dem Wasservorrat 30 abgesaugt und durch einen Filter 71 wieder in gereinigter Form eingeleitet werden. Die Pumpe 70 ist ebenso wie die vorbeschriebene Dosiereinrichtung 67 mit der Steuerung des Dampfgarers 11 verbunden. Der Filter 71 weist mehrere Filterschichten 72 auf. Eine Filterschicht 72a ist ein Mikrofilter. Eine Filterschicht 72b ist ein Ultrafilter, mit dem sogar Viren und makromulekulare organische Verbindungen gefiltert werden. Eine Filterschicht 72c schließlich ist ein Hyperfilter mit Umkehrosmose, durch den sogar atomare Ionen ausgefiltert werden können.

### Funktion der Wassererzeugung

Grundsätzlich ist die Funktion der Umwandlungsmittel als Kondensationseinrichtung 40 samt Peltier-Element 41 oder sonstigem Kühlelement wie folgt. Zuluft wird durch eine Leitung 43 in die Kondensationseinrichtung 40 gebracht. Diese Zuluft kann entweder normale Umgebungsluft sein, wie es durch die Zuleitung 43' dargestellt ist. Allerdings ist hier zu beachten, dass der Feuchtigkeitsanteil bzw. die Luftfeuchtigkeit üblicherweise nicht besonders hoch ist, so dass die Wasserausbeute relativ gering sein wird. Eine Wassergewinnung ist natürlich dennoch möglich. Selbst wenn die Menge an erzeugtem Wasser gering ist, so kann die Kondensationseinrichtung 40 durch längere Betriebszeiten für die meisten Anwendungsfälle genügend Wasser für den Wasservorrat 30 erzeugen.

Wird Dampf über die Dampfzuleitung 43 aus dem Backofen 50 verwendet, so enthält dieser Dampf naturgemäß erheblich mehr Feuchtigkeit als die normale Luft. Da er üblicherweise auch auf Temperaturen zwischen 150° und 200°C aufgeheizt wird in der Backofen-Muffel 51, kann durch einfaches Abkühlen bereits einiges an Feuchtigkeit gewonnen werden. Allerdings ist natürlich für diese Art und Weise der Wassererzeugung der Betrieb des Backofens 50 mit entsprechender Dampferzeugung notwendig.

Als dritte Möglichkeit kann vorgesehen sein, dass Dampf, der normalerweise über den Wrasenabzug 17 des Dampfgarers 11 nach außen entweicht bzw. ausgeblasen wird, über die Dampfzuleitung 43" aufgefangen bzw. abgesaugt und der Kondensationseinrichtung 40 zugeführt wird. Hierfür gilt das Ähnliche wie für die Dampfzuführung des Backofens 50, da auch der Dampf aus dem Dampfgarer 11 naturgemäß viel Feuchtigkeit enthält und sehr heiß ist.

Nach dem entsprechenden Abkühlen der Luft oder des zugeführten Dampfes in der Kondensationseinrichtung 40 wird das so gewonnene Wasser über die Wasserzuleitung 48 in den Wasservorrat 30 eingespeist. Hier kann vorgesehen sein, dass die Kondensationseinrichtung 40 selbst bei nicht eingeschaltetem Dampfgarer 11, abhängig von der Dampferzeugung, solange Wasser aus Dampf oder Umluft erzeugt, bis der Wasservorrat 30 einen bestimmten Füllzustand erreicht hat. Somit ist der Dampfgarer 11 stets für den Betrieb bereit.

Die Abluft der Kondensationseinrichtung 40 wird über einen Abluftauslass 45 ausgeblasen. Bei einem eingebauten Dampfgarer 11 kann dies nach hinten erfolgen. Da diese Abluft sehr trocken ist und üblicherweise auch keine besonders hohe Temperatur hat, kann dies ohne Bedenken gemacht werden.

Es kann vorgesehen sein, dass die Kondensationseinrichtung 40 mehrere der beschriebenen Arten der Wassererzeugung gemeinsam oder wechselweise bzw. bedarfsweise oder nach Möglichkeit durchführt. So kann vorgesehen sein, dass die beiden effizientesten Möglichkeiten zur Wassergewinnung, nämlich aus dem Dampf des Backofens 50 oder aus dem eigenen Dampf aus dem Garraum 13, stets dann durchgeführt werden in der Kondensationseinrichtung 40, wenn entweder der Backofen 50 betrieben wird oder aber der Dampfgarer 11 selber. Sollte sich der Wasservorrat 30 bzw. die Menge an Wasser 31 darin dem Ende zuneigen, und kein Betrieb des Backofens 50 erfolgen, so kann aus der Umgebungsluft immer noch eine bestimmte oder notwendige Menge an Wasser gewonnen werden. Sobald dann der Dampfgarer 11 in Betrieb genommen wird, kann seine eigene Abluft wieder zur Wassererzeugung genutzt werden, sozusagen als eine Art Kreislauf. Ebenso kann vorgesehen sein, dass bei Betrieb des Backofens 50 stets geprüft wird, ob ein Auffüllen des Wasservorrates 30 notwendig ist. In anderer Ausgestaltung kann vorgesehen sein, dass bei Betrieb des Dampfgarers 11 stets eine Wasserrückgewinnung aus dessen Abluft erfolgt.

Eine weitere vorteilhafte Möglichkeit, die sich durch den Einsatz der Kondensationseinrichtung 40 ergibt, ist in Fig. 2 dargestellt. Hier ist zum einen in Abwandlung von Fig. 1 die Kondensationseinrichtung 40' innerhalb des Gehäuses 12 angeordnet, was grundsätzlich auch bei der Ausführung nach Fig. 1 möglich wäre. Daraus ist auch ersichtlich, dass beispielsweise bei Fig. 1 die Kondensationseinrichtung 40 nachträglich an den Dampfgarer 11 angebaut werden könnte. Selbst wenn dort die Dampfzuleitung 43" vom Wrasenausgang 17 kaum nachträglich eingebaut werden kann, so ist doch sowohl die Wasserzuleitung 48 zum Wasservorrat 30 nachträglich zu realisieren als auch die sowieso außen vorgesehenen Zuleitungen 43 und 43'.

Diese Zuleitungen 43 zu der Kondensationseinrichtung 40' bei Fig. 2 sind nur strichliert angedeutet, da es auf sie hier nicht ankommt. Von der Kondensationseinrichtung 40 bzw. deren Abluftauslass 45 geht eine Kühlluftzuleitung 46 in Richtung zu dem Wrasenabzug 17. Sie endet allerdings etwas davor im linken oberen Bereich des Garraums 13. Dazwischen ist noch ein Ventil 70 vorgesehen, welches auch als eine Art Lüfter ausgebildet sein kann. Das Ventil 47 ist entweder mit einer Steuerung des Dampfgarers 11 oder aber einem Türschalter an der Tür 16 verbunden. Wird die Tür 16 im Betrieb des Dampfgarers 11 geöffnet, wird kühle Luft aus der Kühlluftzuleitung 46 über das Ventil 47 in den vorderen oberen Bereich des Garraums 13 eingeleitet. Dadurch kann verhindert werden, dass beim Öffnen der Tür 16 eine größere Menge an heißem Dampf aus dem Garraum 13 einer Bedienperson ins Gesicht schlägt und diese so verbrühen könnte. Es kann also eine Art Kaltluftvorhang im vorderen Bereich des Garraums 13 erzeugt werden. Gleichzeitig sollte darauf geachtet werden, dass die Kühlluft aus der Kühlluftzuleitung 46 nicht zu stark eingeblasen wird. Zum einen könnte dadurch eine zu starke Abkühlung in dem Garraum 13 eintreten, obwohl die Tür 16 nur kurz geöffnet worden ist. Des Weiteren sollte die an sich heiße Luft aus dem Garraum 13 nicht zu stark aus diesem heraus und in eine Küche odgl. hineingeblasen werden, da ansonsten wiederum eine Verletzungsgefahr zu groß ist.

Die in Fig. 2 dargestellte Kühlluftzuleitung 46 kann gleichzeitig mit einer Dampfzuleitung 43" nach Fig. 1 vom Wrasenabzug 17 weg vorgesehen sein. Dabei ist sinnvoll vorgesehen, dass die Dampfzuleitung 43" an anderer Stelle in den Garraum 13 oder den Wrasenabzug 17 übergeht als die Kühlluftzuleitung 46.

Der Dampfgarer 111 gemäß Fig. 3 funktioniert etwas abweichend von dem vorbeschriebenen. Um Feuchtigkeit in den Wasservorrat 130 bzw. das Zeolith 132 in den Umwandlungsmitteln zu bringen zur Speicherung, kann entweder Umgebungsluft oder aber Abluftdampf eines anderen Elektrohaushaltsgeräts beispielsweise ähnlich Fig. 1 an das Zeolith 132 herangeführt werden. Dies erfolgt über die Luftzufuhr 149 und den rechten Lüfter 124'. Da hierfür eine sehr geringe Luftbewegung ausreicht, kann der Lüfter 124', falls er überhaupt betrieben werden muß, mit einem sehr niedrigen Leistungsniveau bzw. im lntervallbetrieb arbeiten.

Jedenfalls kann so das Zeolith 132 aus der vorbeigeführten Luft oder auch dem Abluft-Dampf die Feuchtigkeit entziehen und aufnehmen bzw. speichern. Da ein derartiger Dampfgarer 111 während der meisten Zeit nicht benutzt wird, verbleibt viel Zeit, um so den Wasservorrat 130 zu füllen bzw. für das darin enthaltene Zeolith 132, bis zu seiner Sättigung Feuchte aufzunehmen.

Um nun für den Betrieb des Dampfgarers 111 das Wasser aus dem Wasservorrat 130 wieder zurückzugewinnen, wird das Zeolith 132 erhitzt. Bei Temperaturen zwischen 200°C und 300°C gibt das Zeolith die gespeicherte Feuchtigkeit ab und zwar als Dampf. Hierfür sind die Heizeinrichtung 125 und der rechte Lüfter 124' sowie unter Umständen auch der linke Lüfter 124 vorgesehen. Dies weist den großen Vorteil auf, dass zwar einerseits das Zeolith 132 aufgeheizt werden muß für die Rückgewinnung bzw. Abgabe der Feuchtigkeit. Andererseits wird dabei gleich heißer Dampf erzeugt, wie er für den Betrieb im Garraum 113 benötigt wird. Aufgrund der großen Oberfläche des Zeolith 132 ist auch eine gute und starke Feuchtigkeitsabgabe möglich.

Im Vergleich zu eingangs genannten Umwandlungsmitteln in Form einer Kondensationseinrichtung kann zwar die Energiebilanz bzw. der Aufwand beim Dampferzeugen, wenn überhaupt, nur unwesentlich verringert werden. Da jedoch eine energieintensive Kondensationseinrichtung entfällt und lediglich Umluft- oder Abluftdampf durch den Wasservorrat 130 mit dem Zeolith 132 geleitet werden muß, kann hier elektrische Energie eingespart werden. Des weiteren kann das Zeolith 132 die Feuchtigkeit dauerhaft speichern, ohne dass die Feuchtigkeitsmenge durch Verdunstung geringer wird. Es gibt auch keine oder wesentlich geringere hygienischen Probleme bei der Speicherung des Wassers im Zeolith.

### Funktion der Desinfektion

Die Möglichkeiten der Auswahl eines Zeitpunktes zur Vornahme der Desinfektion sind vorstehend beschrieben. Entweder kann bei Inbetriebnahme des Dampfgarers 11 eine Desinfektion erfolgen. Alternativ können in der Steuerung verschiedene Zeitintervalle abgelegt sein, welche den Desinfektionsvorgang einleiten. Dies kann auch von bestimmten Umgebungsbedingungen abhängen, beispielsweise einer Umgebungstemperatur, da bei hohen Umgebungstemperaturen das Wasser 31 in dem Wasservorrat 30 sicherlich häufiger desinfiziert werden muß. Es ist auch möglich, bei Inbetriebnahme des Dampfgarers 11 das Wasser 31 in dem Wasservorrat 30 noch zu desinfizieren. Dies ist insbesondere mit den UV-Lampen 60 gemäß Fig. 4 oder der Beimischung von Desinfektionsmitteln wie Chlor oder Ozon 66 gemäß Fig. 6 möglich, da diese Verfahren relativ schnell durchführbar sind und relativ schnell gestartet werden können. Insbesondere wenn bei der Einrichtung gemäß Fig. 6 ein kleiner Vorrat für Chlor oder Ozon 66 vorhanden ist, beispielsweise in der Erzeugungseinrichtung 68, kann die Desinfektion sofort nach Inbetriebnahme des Dampfgarers 11 starten.

## Patentansprüche

1. Verfahren zum Betrieb eines Haushaltsgerätes (11, 111), das zu seinem Betrieb Wasser (31) benötigt bzw. verwendet, **dadurch gekennzeichnet, dass** das benötigte Wasser (31) bzw. die benötigte Feuchtigkeit durch Umwandlungsmittel (40, 41, 140) aus Umgebungsluft oder Abluft eines anderen Elektrohaushaltsgerätes (11, 111, 50) erzeugt wird.

2. Verfahren nach Anspruch 1, **dadurch gekennzeichnet, dass** die Umwandlungsmittel eine Kondensationseinrichtung bzw. eine Kühleinrichtung (40, 41) sind zur Erzeugung des Wassers aus Umgebungsluft oder Abluft eines anderen Elektrohaushaltsgerätes (11, 50).

3. Verfahren nach Anspruch 2, **dadurch gekennzeichnet, dass** ein Kompressorkühlschrank verwendet wird zur Erzeugung des Wassers (31).

4. Verfahren nach Anspruch 2, **dadurch gekennzeichnet, dass** ein Peltier-Element (41) verwendet wird zur Erzeugung des Wassers (31).

5. Verfahren nach Anspruch 1, **dadurch gekennzeichnet, dass** die Umwandlungsmittel (140) hydrophiles Material enthalten, insbesondere Zeolithe (132) oder Silikagel, um Wasser bzw. Feuchtigkeit aus der Umgebungsluft oder Abluft zu entziehen und in dem hydrophilen Material zu speichern.

6. Verfahren nach Anspruch 5, **dadurch gekennzeichnet, dass** für die Abgabe der Feuchtigkeit das hydrophile Material (132) erwärmt wird zur Umwandlung der gespeicherten Feuchtigkeit direkt in Dampf, wobei vorzugsweise die Erwärmung des hydrophilen Materials (132) auf gleiche Weise erfolgt wie das Beheizen des Haushaltsgerätes (111), insbesondere durch Anströmen mit erhitzter Luft.

7. Verfahren nach einem der vorhergehenden Ansprüche, **dadurch gekennzeichnet, dass** Abluft des anderen Elektrohaushaltsgerätes (11, 111, 50) in die Umwandlungsmittel (40, 41, 140) geleitet wird, vorzugsweise durch eine fest installierte Leitung (43, 43", 143), insbesondere durch eine feststehende Dampfleitung (43, 143) aus dem Garraum (51, 53) eines Backofens (50) zu dem Haushaltsgerät (11, 111).

8. Verfahren nach einem der Ansprüche 1 bis 6, **dadurch gekennzeichnet, dass** Umgebungsluft in die Umwandlungsmittel (40, 41, 140) geleitet wird, vorzugsweise durch eine fest installierte Leitung (43, 43'', 143).

9. Verfahren nach einem der vorhergehenden Ansprüche, **dadurch gekennzeichnet, dass** das erzeugte Wasser (31) in einem Wasservorrat (30, 130) in dem Haushaltsgerät (11, 111) gespeichert wird, aus dem das Wasser entnommen wird zum Betrieb des Haushaltsgerätes, insbesondere zur Dampferzeugung.

10. Verfahren nach Anspruch 1, wobei das Haushaltsgerät insbesondere als Dampfgarer (11) einen befüllbaren Wasservorrat (30) aufweist, aus dem während des Betriebes Wasser (31) entnommen wird, **gekennzeichnet durch** eine Desinfektion (60, 62, 66, 71) des Wassers (31) zu vorgebbaren Zeiten.

11. Verfahren nach Anspruch 10, **gekennzeichnet durch** eine permanente Desinfektion (60), vorzugsweise zumindest permanent während das Haushaltsgerät (11) aus einem Stand-by-Betrieb in einen aktiven Zustand der Funktionsbereitschaft versetzt ist.

12. Verfahren nach Anspruch 10, **dadurch gekennzeichnet, dass** der Wasservorrat (30) in gewissen vorgegebenen Zeitabständen desinfiziert wird, wobei vorzugsweise diese Zeitabstände durch eine Steuerung (36) bestimmt werden.

13. Verfahren nach Anspruch 10, **dadurch gekennzeichnet, dass** eine gesonderte Desinfektion bei von einer Bedienperson ausgelösten Aktivierung des Haushaltsgerätes (11) erfolgt bevor der Betrieb des Haushaltsgerätes beginnt.

14. Haushaltsgerät (11, 111) zur Durchführung des Verfahrens nach einem der Ansprüche 1 bis 9, **dadurch gekennzeichnet, dass** es Umwandlungsmittel (40, 41, 140) zur Wassererzeugung bzw. Feuchtigkeitserzeugung aus Abluft eines anderen Elektrohaushaltsgerätes (11, 111, 50) aufweist und dazu mittels einer Luft- oder Dampfleitung an das andere Elektrohaushaltsgerät angeschlossen ist.

15. Haushaltsgerät (11, 111) nach Anspruch 14, **gekennzeichnet durch** eine Kondensationseinrichtung bzw. eine Kühleinrichtung (40, 41) als Umwandlungsmittel zur Wassererzeugung aus Umgebungsluft oder Abluft eines anderen Elektrohaushaltsgerätes (11, 50).

16. Haushaltsgerät (11) nach Anspruch 15, **gekennzeichnet durch** einen Kompressorkühlschrank als Umwandlungsmittel zur Wassererzeugung.

17. Haushaltsgerät (11) nach Anspruch 15, **gekennzeichnet durch** ein Peltier-Element (41) als Umwandlungsmittel zur Wassererzeugung.

18. Haushaltsgerät (11, 111) nach Anspruch 14, **dadurch gekennzeichnet, dass** die Umwandlungsmittel (140) hydrophiles Material (132) enthalten, insbesondere Zeolithe oder Silikagel zur Entziehung von Wasser bzw. Feuchtigkeit aus der Umgebungsluft oder Abluft und zur Speicherung in dem hydrophilen Material (132).

19. Haushaltsgerät (111) nach Anspruch 18, **dadurch gekennzeichnet, dass** dem hydrophilen Material (132) bzw. den Umwandlungsmitteln (140) Erwärmungsmittel (125) zugeordnet sind zur Umwandlung der gespeicherten Feuchtigkeit direkt in Dampf durch Erwärmung des hydrophilen Materials (132), vorzugsweise durch die Erwärmungsmittel zum Beheizen des Haushaltsgerätes (111), insbesondere durch Anströmen mit erhitzter Luft.

20. Haushaltsgerät nach einem der Ansprüche 14 bis 19, **gekennzeichnet durch** eine Luftleitung (43, 43", 143), die Abluft eines anderen Elektrohaushaltsgerätes (11, 111, 50) in die Umwandlungsmittel (40, 41, 140) leitet, vorzugsweise als fest installierte Leitung, insbesondere als feststehende Dampfleitung (43, 53, 143) vom Garraum (51) bzw. Wrasenausgang eines anderen Backofens (50) zu dem Haushaltsgerät (11, 111).

21. Haushaltsgerät nach einem der Ansprüche 14 bis 20, **gekennzeichnet durch** einen Wasservorrat (30, 130) in dem Haushaltsgerät (11, 111) für das erzeugte Wasser (31) zur Wasserentnahme zum Betrieb des Haushaltsgerätes, insbesondere zur Dampferzeugung.

22. Haushaltsgerät nach Anspruch 18 und 21, **dadurch gekennzeichnet, dass** in dem Wasservorrat (30, 130) hydrophile Materialien angeordnet sind, insbesondere in einem eigenen Behälter oder einer Aufnahme, vorzugsweise Zeolithe (32, 132) oder Silikagel.

23. Haushaltsgerät für eine Funktion mit Wasser nach einem der Ansprüche 14 bis 22, wobei das Haushaltsgerät (11) einen Wasservorrat (30) aufweist, **gekennzeichnet durch** eine Desinfektionseinrichtung (60, 62, 65, 71) für das Wasser (31) in dem Wasservorrat.

24. Haushaltsgerät nach Anspruch 23, **gekennzeichnet durch** eine Desinfektionseinrichtung mit Einsatz einer elektrischen Funktionseinrichtung, insbesondere zur thermischen Behandlung als Desinfektion, wobei vorzugsweise eine elektrische Heizeinrichtung (62, 63) in den Wasservorrat (30) ragt zum Erhitzen des Wassers (31).

25. Haushaltsgerät nach Anspruch 23, **gekennzeichnet durch** eine einer UV-Lichtquelle (60a-c) zur Desinfektion **durch** Bestrahlung mit UV-Licht mit einer Wellenlänge im Bereich zwischen 200nm und 280nm.

26. Haushaltsgerät nach Anspruch 23, **gekennzeichnet durch** eine Desinfektionseinrichtung mit Chlor (66), wobei vorzugsweise eine Elektrolyseeinrichtung (68) zur Erzeugung des Chlors aus Kochsalz in dem Haushaltsgerät (11) vorgesehen ist.

27. Haushaltsgerät nach Anspruch 23, **gekennzeichnet durch** eine Desinfektionseinrichtung (68) mit Ozon (66), wobei vorzugsweise eine Mischeinrichtung (65) zur Beimischung des Ozons zu dem Wasservorrat (30) vorgesehen ist, wobei Mittel zum Erzeugen des Ozons (68) in dem Haushaltsgerät (11) vorgesehen sind, insbesondere mittels Leiten von Luft **durch** ein starkes elektrisches Feld mit hoher Spannung.

28. Haushaltsgerät nach Anspruch 23, **gekennzeichnet durch** Filter (71) zur Desinfektion, wobei mehrere Filter (72) in der Reihenfolge kleiner werdender Porengrößen vorgesehen sind, wobei vorzugsweise Mikrofilter (72b) zum Filtern von Bakterien vorgesehen sind und insbesondere auch Ultrafilter (72c) zum Filtern von Viren und makromolekularen organischen Verbindungen vorgesehen sind.

## Claims

1. Method for operating a household appliance (11, 111) that utilizes water (31), **characterized in that** the needed water (31) or moisture is produced by converting means (40, 41, 140) from ambient air or waste air of another electrical household appliance (11, 111, 50).

2. Method according to Claim 1, **characterized in that** the converting means are a condensation device or a cooling device (40, 41) for producing the water from ambient air or waste air of another electrical household appliance (11, 50).

3. Method according to Claim 2, **characterized in that** a compressor refrigerator is used for producing the water (31).

4. Method according to Claim 2, **characterized in that** a Peltier element (41) is used for producing the water (31).

5. Method according to Claim 1, **characterized in that** the converting means (140) contain hydrophilic material, in particular zeolites (132) or silica gel to extract water or moisture from the ambient air or waste air and to store it in the hydrophilic material.

6. Method according to Claim 5, **characterized in that** for release of the moisture the hydrophilic material (132) is heated to convert the stored moisture directly into steam, the hydrophilic material (132) being heated preferably in the same way as the household appliance (111), in particular by subjecting it to a heated air flow.

7. Method according to one of the preceding claims, **characterized in that** waste air of the other electrical household appliance (11, 111, 50) is passed into the converting means (40, 41, 140), preferably through a permanently installed pipe (43, 43", 143), in particular through a fixed steam pipe (43, 143) from the cooking chamber (52, 53) of an oven (50) to the household appliance (11, 111).

8. Method according to one of Claims 1 to 6, **characterized in that** ambient air is passed into the converting means (40, 41, 140), preferably through a permanently installed pipe (43, 43", 143).

9. Method according to one of the preceding claims, **characterized in that** the produced water (31) is stored in a water reservoir (30, 130) inside the household appliance (11, 111), from which water reservoir the water is extracted for operating the household appliance, in particular for producing steam.

10. Method according to Claim 1, with the household appliance, in particular as a steamer (11), having a fillable water reservoir (30) from which water (31) is extracted during operation, **characterized by** a disinfection (60, 62, 66, 71) of the water (31) at presettable times.

11. Method according to Claim 10, **characterized by** a permanent disinfection (60), preferably at least permanent while the household appliance (11) is changed from a stand-by mode to an active state of readiness for operation.

12. Method according to Claim 10, **characterized in that** the water reservoir (30) is disinfected at certain preset intervals, these intervals preferably being determined by a control (36).

13. Method according to Claim 10, **characterized in that** a special disinfection takes place in the event of an operator triggering the activation of the household appliance (11) before the latter starts operation.

14. Household appliance (11, 111) for performance of the method according to one of Claims 1 to 9, **characterized in that** it has converting means (40, 41, 140) for producing water or moisture from the waste air of another electrical household appliance (11, 111, 50) and to do so is connected by an air pipe or steam pipe to the other electrical household appliance.

15. Household appliance (11, 111) according to Claim 14, **characterized by** a condensation device or a cooling device (40, 41) as converting means for producing water from ambient air or waste air of another electrical household appliance (11, 50).

16. Household appliance (11) according to Claim 15, **characterized by** a compressor refrigerator as converting means for producing the water.

17. Household appliance (11) according to Claim 15, **characterized by** a Peltier element (41) as converting means for producing the water.

18. Household appliance (11, 111) according to Claim 14, **characterized in that** the converting means (140) contain hydrophilic material (132), in particular zeolites or silica gel for extracting water or moisture from the ambient air or waste air and storing it in the hydrophilic material (132).

19. Household appliance (111) according to Claim 18, **characterized in that** the hydrophilic material (132) or the converting means (140) are assigned heating means (125) for converting the stored moisture directly into steam by heating the hydrophilic material (132), preferably by the heating means for heating the household appliance (111), in particular by subjecting it to a heated air flow.

20. Household appliance according to one of Claims 14 to 19, **characterized by** an air pipe (43, 43", 143) passing the waste air of another electrical household appliance (11, 111, 50) into the converting means (40, 41, 140), preferably as a permanently installed pipe, in particular as a fixed steam pipe (43, 53, 143) from the cooking chamber (51) or vapour outlet of another oven (50) to the household appliance (11, 111).

21. Household appliance according to one of Claims 14 to 20, **characterized by** a water reservoir (30, 130) inside the household appliance (11, 111) for the produced water to extract water for operating the household appliance, in particular to produce steam.

22. Household appliance according to Claims 18 and 21, **characterized in that** hydrophilic materials are provided inside the water reservoir (30, 130), in particular in their own container or receptacle, preferably zeolites (32, 132) or silica gel.

23. Household appliance for a function with water according to one of Claims 14 to 22, with the household appliance (11) having a water reservoir (30), **characterized by** a disinfection device (60, 62, 65, 71) for the water (31) in the water reservoir.

24. Household appliance according to Claim 23, **characterized by** a disinfection device with the use of an electrical function device, in particular for thermal treatment as a disinfection, with an electrical heating device (62, 63) preferably projecting into the water reservoir (30) to heat the water (31).

25. Household appliance according to Claim 23, **characterized by** a UV light source (60a-c) for disinfection by irradiation with UV light having a wavelength in the range between 200nm and 280nm.

26. Household appliance according to Claim 23, **characterized by** a disinfection device with chlorine (66), with an electrolysis device (68) preferably being provided for producing the chlorine from common salt inside the household appliance (11).

27. Household appliance according to Claim 23, **characterized by** a disinfection device (68) with ozone (66), with a mixing device (65) for admixing the ozone to the water reservoir (30) preferably being provided, with means to generate the ozone (68) being provided inside the household appliance (11), in particular by passing air through a strong electrical field with high voltage.

28. Household appliance according to Claim 23, **characterized by** filters (71) for disinfection, with several filters (72) being provided in a sequence with decreasing pore sizes, with preferably microfilters (72b) being provided for filtering bacteria, and in particular with ultrafilters (72c) also being provided for filtering viruses and macromolecular organic compounds.

## Revendications

1. Procédé pour l'utilisation d'un appareil ménager (11, 111) qui nécessite ou utilise de l'eau (31) pour fonctionner, **caractérisé en ce que** l'eau (31) nécessitée ou l'humidité nécessitée est produite par des moyens de transformation (40, 41, 140) à partir de l'air ambiant ou de l'air sortant d'un autre appareil électroménager (11, 111, 50).

2. Procédé selon la revendication 1, **caractérisé en ce que** les moyens de transformation sont un dispositif de condensation ou un dispositif réfrigérant (40, 41) pour produire l'eau à partir de l'air ambiant ou de l'air sortant d'un autre appareil électroménager (11, 50).

3. Procédé selon la revendication 2, **caractérisé en ce qu'**un réfrigérateur à compression est utilisé pour la production de l'eau (31).

4. Procédé selon la revendication 2, **caractérisé en ce qu'**un élément frigorifique Peltier (41) est utilisé pour la production de l'eau (31).

5. Procédé selon la revendication 1, **caractérisé en ce que** les moyens de transformation (140) contiennent un matériau hydrophile, en particulier de la zéolithe (132) ou du silicagel, afin d'extraire de l'eau ou de l'humidité de l'air ambiant ou de l'air sortant et de la retenir dans le matériau hydrophile.

6. Procédé selon la revendication 5, **caractérisé en ce que,** pour restituer l'humidité, le matériau hydrophile (132) est chauffé pour transformer directement l'humidité retenue en vapeur, sachant que de préférence, l'échauffement du matériau hydrophile (132) a lieu de la même manière que le chauffage de l'appareil ménager (111), en particulier par soufflage d'air chaud.

7. Procédé selon l'une des revendications précédentes, **caractérisé en ce que** l'air sortant de l'autre appareil électroménager (11, 111, 50) est acheminé vers les moyens de transformation (40, 41, 140), de préférence par une conduite (43, 43", 143) installée à demeure, en particulier par une conduite de vapeur fixe (43, 143) reliant la zone de cuisson (51, 53) d'un four de cuisinière (50) à l'appareil ménager (11, 111).

8. Procédé selon l'une des revendications 1 à 6, **caractérisé en ce que** l'air ambiant est acheminé vers les moyens de transformation (40, 41, 140), de préférence par une conduite installée à demeure (43, 43", 143).

9. Procédé selon l'une des revendications précédentes, **caractérisé en ce que** l'eau produite (31) est retenue dans un réservoir d'eau (30, 130) situé dans l'appareil ménager (11, 111) et dans lequel l'eau est prélevée pour le fonctionnement de l'appareil ménager, en particulier pour produire de la vapeur.

10. Procédé selon la revendication 1, sachent que l'appareil ménager, constitué en particulier d'un autocuiseur (11), présente un réservoir d'eau (30) remplissable dans lequel de l'eau (31) est prélevée pendant le fonctionnement, **caractérisé par** une désinfection (60, 62, 66, 71) de l'eau (31) à des moments prédéterminables.

11. Procédé selon la revendication 10, **caractérisé par** une désinfection permanente (60), de préférence au moins permanente pendant que l'appareil ménager (11) est commuté d'un mode de veille en un état actif opérationnel.

12. Procédé selon la revendication 10, **caractérisé en ce que** le réservoir d'eau (30) est désinfecté à certains intervalles de temps prédéterminés, ces intervalles de temps étant de préférence déterminés par une commande (36).

13. Procédé selon la revendication 10, **caractérisé en ce qu'**une désinfection distincte a lieu avant que l'appareil ménager commence à fonctionner lorsqu'un opérateur a déclenché une activation de l'appareil ménager (11).

14. Appareil ménager (11, 111) pour réaliser le procédé selon l'une des revendications 1 bis 9, **caractérisé en ce qu'**il présente des moyens de transformation (40, 41, 140) pour produire de l'eau ou de la vapeur à partir de l'air sortant d'un autre appareil électroménager (11, 111, 50) et qu'il est à cet effet raccordé à l'autre appareil électroménager au moyen d'une conduite d'air ou de vapeur.

15. Appareil ménager (11, 111) selon la revendication 14, **caractérisé par** un dispositif de condensation ou un dispositif réfrigérant (40, 41) comme moyen de transformation pour produire de l'eau à partir de l'air ambiant ou de l'air sortant d'un autre appareil électroménager (11, 50).

16. Appareil ménager (11) selon la revendication 15, **caractérisé par** un réfrigérateur à compression comme moyen de transformation pour produire de l'eau.

17. Appareil ménager (11) selon la revendication 15, **caractérisé par** un élément frigorifique Peltier (41) comme moyen de transformation pour produire de l'eau.

18. Appareil ménager (11, 111) selon la revendication 14, **caractérisé en ce** les moyens de transformation (140) contiennent un matériau hydrophile (132), en particulier de la zéolithe ou du silicagel, afin d'extraire de l'eau ou de l'humidité de l'air ambiant ou de l'air sortant et de la retenir dans le matériau hydrophile (132).

19. Appareil ménager (111) selon la revendication 18, **caractérisé en ce que** le matériau hydrophile (132) ou les moyens de transformation (140) sont associés à des moyens d'échauffement (125) pour transformer l'humidité retenue directement en vapeur par échauffement du matériau hydrophile (132), de préférence par les moyens d'échauffement pour chauffer l'appareil ménager (111), en particulier par soufflage d'air chaud.

20. Appareil ménager selon l'une des revendications 14 à 19, **caractérisé par** une conduite d'air (43, 43", 143) qui achemine l'air sortant d'un autre appareil électroménager (11, 111, 50) vers les moyens de transformation (40, 41, 140), qui est de préférence une conduite installée à demeure, en particulier une conduite de vapeur fixe (43, 53, 143) reliant la zone de cuisson (51) ou la sortie des vapeurs d'un autre four de cuisinières (50) à l'appareil ménager (11, 111).

21. Appareil ménager selon l'une des revendications 14 à 20, **caractérisé par** un réservoir d'eau (30, 130) situé dans l'appareil ménager (11, 111) et dans lequel l'eau produite (31) est prélevée pour le fonctionnement de l'appareil ménager, en particulier pour produire de la vapeur.

22. Appareil ménager selon les revendications 18 et 21, **caractérisé en ce que** dans le réservoir d'eau (30, 130) sont disposés des matériaux hydrophiles, en particulier dans un propre récipient ou dans un logement, de préférence de la zéolithe (32, 132) ou du silicagel.

23. Appareil ménager pour un fonctionnement avec de l'eau selon l'une des revendications 14 à 22, l'appareil ménager (11) présentant un réservoir d'eau (30), **caractérisé par** un dispositif de désinfection (60, 62, 65, 71) pour l'eau (31) dans le réservoir d'eau.

24. Appareil ménager selon la revendication 23, **caractérisé par** un dispositif de désinfection avec mise en oeuvre d'un dispositif fonctionnel électrique, en particulier pour le traitement thermique comme désinfection, sachant que de préférence un dispositif de chauffage électrique (62, 63) fait saillie dans le réservoir d'eau (30) pour chauffer l'eau (31).

25. Appareil ménager selon la revendication 23, **caractérisé par** une source de lumière UV (60a-c) pour désinfecter avec un rayon de lumière UV ayant une longueur d'onde située dans la plage comprise entre 200 nm et 280 nm.

26. Appareil ménager selon la revendication 23, **caractérisé par** un dispositif de désinfection avec du chlore (66), sachant qu'est prévu de préférence un dispositif d'électrolyse (68) pour produire le chlore à partir de sel de cuisine dans l'appareil ménager (11).

27. Appareil ménager selon la revendication 23, **caractérisé par** un dispositif de désinfection (68) avec de l'ozone (66), sachant qu'est prévu de préférence un dispositif mélangeur (65) pour ajouter l'ozone dans le réservoir d'eau (30), et que le moyen pour produire l'ozone (68) est prévu dans l'appareil ménager (11), en particulier par passage d'air à travers un fort champ électrique ayant une tension élevée.

28. Appareil ménager selon la revendication 23, **caractérisé par** des filtres (71) pour désinfecter, plusieurs filtres (72) aux pores successivement de plus en plus petites étant prévus, sachant que sont prévus de préférence des microfiltres (72b) pour filtrer des bactéries et également en particulier des ultrafiltres (72c) pour filtrer des virus et des liaisons organiques macromoléculaires.
